# EUROPÄISCHE PATENTSCHRIFT

(11) **EP 1 079 980 B1**
(45) Veröffentlichungstag und Bekanntmachung des Hinweises auf die Patenterteilung: **31.07.2002**
(21) Anmeldenummer: 99920455.5
(22) Anmeldetag: 19.05.1999
(51) Int. Cl.: B60F 1/04, B61D 3/18

(54) **Schienen-/Strassenfahrzeugkombination**
Road and rail vehicle combination
Combinaison d'un véhicule ferroviaire et routier

(30) Priorität: 27.05.1998 AT 90898
(43) Veröffentlichungstag der Anmeldung: 07.03.2001
(73) Patentinhaber: Claassen, Dirk Peter, 8045 Graz (AT)
(72) Erfinder: Claassen, Dirk Peter, 8045 Graz (AT)
(74) Vertreter: Laminger, Norbert, Mag.
(86) Internationale Anmeldenummer: AT9900126
(87) Internationale Veröffentlichungsnummer: WO9961266

(56) Entgegenhaltungen:
- WO-A-93/24339
- US-A- 2 992 621
- US-A- 4 938 151

## Beschreibung

Die Erfindung betrifft eine Fahrzeuganordnung, bestehend aus zumindest zwei Fahrzeugen, wobei ein erstes Fahrzeug mit einem Führerstand, einem Antrieb durch ausschließlich eine Verbrennungskraftmaschine, einem Fahrwerk für eine spezielle Art von Verkehrsweg und Verbindungs- sowie Bedien- und Steuereinrichtungen für zumindest ein weiteres Fahrzeug mit integriertem Motor ausgestattet ist, wobei das erste Fahrzeug allenfalls mit zumindest einem wahlweise aktivierbaren, zusätzlichen Fahrwerk für eine zweite Art von Verkehrsweg ausgestattet ist oder allenfalls das Fahrwerk des ersten Fahrzeuges abnehmbar ist und Aufnahmen für zumindest ein anderes Fahrwerk für eine zweite Art von Verkehrsweg vorgesehen sind, wobei weiters zumindest ein weiteres Fahrzeug der Fahrzeuganordnung als führerstandslose externe Antriebseinheit mit Elektromotor und mit zumindest einer Antriebs- und Bremskräfte übertragenden Verbindungseinrichtung und zumindest einer Schnittstelle zu den Bedien- und Steuereinrichtungen am ersten Fahrzeug ausgeführt ist.

Es sind bereits verschiedene Fahrzeugkonstruktionen im Stand der Technik beschrieben, die sowohl für den Betrieb als Schienen- als auch als Straßenfahrzeug umwandelbar sind. So zeigt etwa die WO95/29822 ein Straßenfahrzeug mit zusätzlichen Schienenlaufwerken, von welchen eines eine Antriebseinheit trägt. In der WO93/24339 (den Oberbegriffen der Ansprüche 1 und 7 entsprechend) ist ein umwandelbares Fahrzeug beschrieben, bei dem bedarfsweise das Straßen-Zugfahrzeug auf ein spezielles Schienenfahrzeug auffährt, mit diesem verbunden wird und dann einen zeitweilig mit Schienenlaufwerken ausstattbaren Anhänger zieht. Ein Elektromotor dieses Schienenfahrzeuges wird dabei vom Verbrennungsmotor des aufgefahrenen Straßen-Zugfahrzeuges angetrieben bzw. kann von einem zusätzlichen Verbrennungsmotor, der auf dem Schienenfahrzeug selbst vorgesehen ist, angetrieben werden. Überdies ist die Umwandlung von Straßenfahrzeug-Anhängern in Schienenwaggons bzw. umgekehrt Gegenstand vieler Anmeldungen, beispielsweise der bereits genannten WO93/24339 A, der EP-0 323 933 A1 oder der EP-0 487 427 A1. Diese Systeme sind meist für abwechselnden, dann aber länger dauernden Betrieb in jeweils einer der Betriebsarten - Schiene oder Straße - ausgelegt, weshalb auch längere bzw. aufwendigere Umbauten oder Umrüstvorgänge nicht sehr ins Gewicht fallen. Für oftmals und rasch aufeinanderfolgenden Wechsel zwischen den Betriebsarten sind diese Systeme zu unflexibel und aufwendig.

In der US 4 938 151 A ist eine Fahrzeuganordnung beschrieben, bei welcher normalerweise für den Straßenbetrieb ausgelegte Fahrzeuge auf Schienenlaufwerke aufgesetzt werden, wobei auch das mit einem Verbrennungsmotor ausgestattete Zugfahrzeug auf Schienenlaufwerke gesetzt wird und weiter nicht für den Antrieb des Schienenfahrzeug-Zuges genutzt wird. Für den Antrieb des Zuges ist hingegen ein eigener Antriebs-Anhänger vorgesehen, der mit einem über einen Verbrennungsmotor angetriebenen Elektromotor ausgestattet ist, aber vom Zugfahrzeug aus gesteuert und bedient wird.

Weiters gibt es auch viele Veröffentlichungen zum Thema Hybridantrieb, wobei ein Verbrennungsmotor und ein Elektromotor bzw. anderer Antrieb in einem Fahrzeug abwechselnd für die Fortbewegung genutzt werden. Die Hybridantriebe wiederum sind meist seriell vorgesehen und weisen darüber hinaus den Nachteil auf, dass das Fahrzeug in jeder Betriebsart das Mehrgewicht des jeweils inaktiven Antriebssystems mittragen muss. Elektroantriebe sind dabei aufgrund der Batterien oder Akkumulatoren sehr schwer und weisen nur begrenzte Reichweite und Steigfähigkeit auf.

Auch wurden bereits beispielsweise in der US 3,709,153 B und der US 3,638,579 B Verschub-Zugmaschinen für Eisenbahnwaggons mit Schienen- und Straßenfahrwerk vorgeschlagen, die beim Verschieben der Eisenbahnwaggons auf den Schienen fahren und von und zum Verschubplatz auf einem Straßenfahrwerk gelangen können. Diese Verschub-Zugmaschinen sind für nur kurze Strecken und für führerstandslose und nicht selbst angetriebene Fahrzeuge vorgesehen, bis diese in zusammengestellter Form von einer herkömmlichen Lokomotive über längere Distanzen gezogen werden.

Eine Fahrzeuganordnung wie eingangs beschrieben ist in der DE 43 05 862 A1 offenbart, wobei zwei normalerweise vollkommen autonome und gleichartige Fahrzeuge für einen zeitweisen Tandem-Betrieb zur Erzielung höherer Leistung gekoppelt sind. Dabei sind aber beide Fahrzeuge voll ausgerüstet, obwohl eigentlich nur ein Führerstand und ein Satz von Bedienungselementen in Gebrauch sind. Ein Bereitstellen von derartigen Fahrzeugen zum nur zeitweisen Gebrauch mit anderen gleichartigen Fahrzeugen ist völlig unwirtschaftlich.

Es ist daher die Aufgabe der vorliegenden Erfindung, eine Fahrzeuganordnung zu schaffen, welche für den einfachen und raschen oftmaligen Wechsel der Antriebs- und Fahrwerkssysteme für unterschiedliche Antriebsarten und Fahrwege geeignet ist und sich daher speziell für den intermodalen Betrieb öffentlicher Verkehrssysteme in städtischen Gebieten eignet. Speziell sollte ein Fahrzeug mit Antrieb durch wechselweise eine Verbrennungskraftmaschine und einen Elektromotor vorgeschlagen werden, das sich speziell für den Betrieb in öffentlichen Verkehrssystemen, insbesondere in städtischen Gebieten, eignet.

Zur Lösung dieser Aufgabe ist erfindungsgemäß vorgesehen, dass die führerstandslose externe Antriebseinheit mit einem unabhängig von jeglicher Art von Verbrennungsmotor betreibbaren Elektromotor ausgestattet ist. Die separate externe Antriebseinheit, allenfalls auch bei Bedarf mehrere Antriebseinheiten für jedes sonst autonome Fahrzeug, kann für bestimmte Fahrstrecken, beispielsweise für innerstädtischen umweltschonenden elektrischen Betrieb sonst auf Freilandstrecken durch den Verbrennungsmotor betriebener Fahrzeuge, zur Verfügung gestellt werden und braucht nur für diese Zwecke mit dem sonst unabhängig davon betreibbaren Fahrzeug gekoppelt werden. Da die Bedienung und Steuerung der Antriebseinheit nach dem Ankoppeln vom Fahrzeug aus erfolgt, kann sie sehr einfach und wirtschaftlich ausgeführt sein und kann damit auch in größerer Stückzahl an bestimmten Grenzstellen für Motor- oder Elektrobetrieb zur Verfügung gehalten werden, speziell für ein öffentliches Verkehrssystem. Beispielsweise könnten in dünner besiedelten Gebieten verkehrende Autobusse mit Verbrennungsmotoren in dichter besiedelten Gebieten, etwa dem Stadtzentrum, nach Fahrwerkswechsel auf Schienen geführt und mit Elektro-Antriebseinheiten gekoppelt werden. Sie könnten sogar in der Art von U-Bahnen auf unterirdisch verlegten Schienenwegen geführt werden. Auch bezüglich der Steigfähigkeit wäre eine optimale Anpassung möglich, da im Falle steiler Verkehrswege der Betrieb im Straßenfahrzeug-Modus und in ebenen Bereichen im Schienenfahrzeug-Modus erfolgen kann. Der in die externe Antriebseinheit integrierte Elektromotor ist speziell in Ballungszentren vor Vorteil, wo auch die Bereitstellung der Stromversorgung bzw. die Wiederaufladung keine Probleme bieten, weil damit die Emissionssituation positiv beeinflusst werden kann.

Besonders vorteilhaft ist eine Ausführungsform der externen Antriebseinheiten, gemäß welcher zumindest ein Stromabnehmer zur elektrisch leitenden Verbindung mit einer Stromschiene oder einer Stromleitung, vorzugsweise einer Oberleitung, vorgesehen ist. Damit entfällt die Notwendigkeit für schwere und platzaufwendige Batterien bzw. Akkumulatoren und es besteht darüber hinaus die Möglichkeit, bereits bestehende Stromversorgungsanlagen, etwa Oberleitungen von Eisen- bzw. Straßenbahnen oder O-Bussen sowie Stromschienen im U-Bahn-Bereich, zu nutzen.

Für Gebiete ohne Stromversorgungs-Infrastruktur ist selbstverständlich die Möglichkeit gegeben, dass zumindest eine Batterie bzw. ein Akkumulator vorhanden und mit dem Elektromotor verbindbar sind, um auch in diesen Gebieten die Vorzüge des Elektroantriebs nutzen zu können.

Gemäß einem weiteren Merkmal der Erfindung ist das Fahrwerk der externen Antriebseinheit für eine andere Art von Fahrweg ausgelegt als das Fahrwerk des ersten Fahrzeuges. Damit kann auf Problemstrecken in bezug auf eine Art von Fahrweg, beispielsweise Schienenstrecken mit besonders starker Steigung, durch Ankoppelung einer Antriebseinheit mit einer besseren oder anderen Art der Kraftübertragung auf einen anderen Fahrweg, beispielsweise ein Straßenfahrwerk mit höherer übertragbarer Antriebsund Bremskraft, diese Problemstrecke überwunden werden. Danach kann das Fahrzeug die Antriebseinheit wieder abkoppeln und autonom weiterfahren, während die Antriebseinheit für ein nächstes Fahrzeug auf der Problemstrecke zur Verfügung steht.

Wenn gemäß einer weiteren vorteilhaften Ausführungsform der Erfindung auch die Antriebseinheit mit zumindest einem zusätzlichen Fahrwerk für eine zweite, unterschiedliche Art von Verkehrsweg ausgestattet ist, welches zusätzliche Fahrwerk wahlweise aktiviert werden kann, ist damit der ungehinderte und komplett intermodale Betrieb möglich. Die externe Antriebseinheit kann dabei vorteilhafterweise auch bei kurzfristigem Wechsel der Betriebsart des Fahrzeugs diesen Wechsel mitvollziehen, so dass trotz eines unterschiedlichen Verkehrsweges die Vorzüge der jeweiligen Antriebsvariante weiter genutzt werden können. Beispielsweise können bei Unterbrechung des Schienennetzes die Fahrzeuge im Straßenbetrieb weitergeführt werden, wobei aber der umweltfreundliche Elektroantrieb weiter angekoppelt und in Betrieb bleiben kann.

Alternativ zur Variante des vorhergehenden Absatzes und mit den selben Vorteilen kann auch vorgesehen sein, dass das Fahrwerk abnehmbar ist und Aufnahmen für zumindest ein anderes Fahrwerk für eine zweite, unterschiedliche Art von Verkehrsweg vorgesehen sind. Während etwas Zeit für die Umrüstung notwendig ist, kann dies oftmals durch den Vorteil der leichteren Ausführung aufgewogen werden, da nicht zwei Fahrwerke mitgeführt werden müssen.

Gemäß einer anderen Ausführungsform der Erfindung kann ebenfalls zur Lösung der gestellten Aufgabe eine Fahrzeuganordnung vorgesehen sein, bestehend aus zumindest zwei Fahrzeugen, wobei ein erstes Fahrzeug mit einem Führerstand, einem Antrieb durch ausschließlich eine Verbrennungskraftmaschine, einem Fahrwerk für eine spezielle Art von Verkehrsweg und Verbindungs- sowie Bedien- und Steuereinrichtungen für zumindest ein weiteres Fahrzeug mit integriertem Elektromotor ausgestattet ist, wobei ein weiteres Fahrzeug der Anordnung eine Aufnahme- bzw. Ladefläche zum Tragen zumindest des ersten Fahrzeuges der Fahrzeuganordnung, zumindest eine Verbindungseinrichtung zu diesem getragenen Fahrzeug und zumindest eine Schnittstelle zu den Bedien- und Steuereinrichtungen an diesem Fahrzeug aufweist, und welche Fahrzeuganordnung dadurch gekennzeichnet ist, dass die externe Antriebseinheit zumindest einen integrierten Elektromotor aufweist, der unabhängig vom Verbrennungsmotor des ersten Fahrzeuges betreibbar und mit zumindest einem Antriebsund Bremskräfte auf einen Verkehrsweg übertragenden Fahrwerk verbunden ist.

Wenn zusätzlich zur ersten Verbindungseinrichtung zumindest eine weitere Verbindungseinrichtung zu einem weiteren Fahrzeug und/oder einer weiteren externen Antriebseinheit vorhanden ist, wobei vorzugsweise auch Schnittstellen für Bedien- und Steuereinrichtungen zu einem weiteren Fahrzeug und/oder einer weiteren externen Antriebseinheit vorhanden sind, kann auf bestimmten Strecken eine Art Zugverband aus sonst autonomen Fahrzeugen gebildet werden, welche aufgrund der Trassenführung oder der speziellen Art von Fahrweg nur von einem Fahrer gesteuert werden muss oder kann, insbesondere mit einem umweltfreundlicheren Antriebssystem der externen Antriebseinheiten als dem Verbrennungsmotor der Fahrzeuge.

In der nachfolgenden Beschreibung soll die Erfindung anhand einiger Ausführungsbeispiele, die in den beigefügten Zeichnungen dargestellt sind, näher erläutert werden.

Dabei zeigt die Fig.1 ein Fahrzeug mit angekoppelten externen Antriebseinheiten, Fig. 2 ein Fahrzeug, das auf einer als separates Fahrzeug ausgeführten Antriebseinheit aufgeladen ist, Fig. 3 ist eine schematische Darstellung der Kopplung eines Fahrzeuges mit einer externen Antriebseinheit und Fig. 4 zeigt einen Zug von zwei Fahrzeugen mit zwei externen Antriebseinheiten.

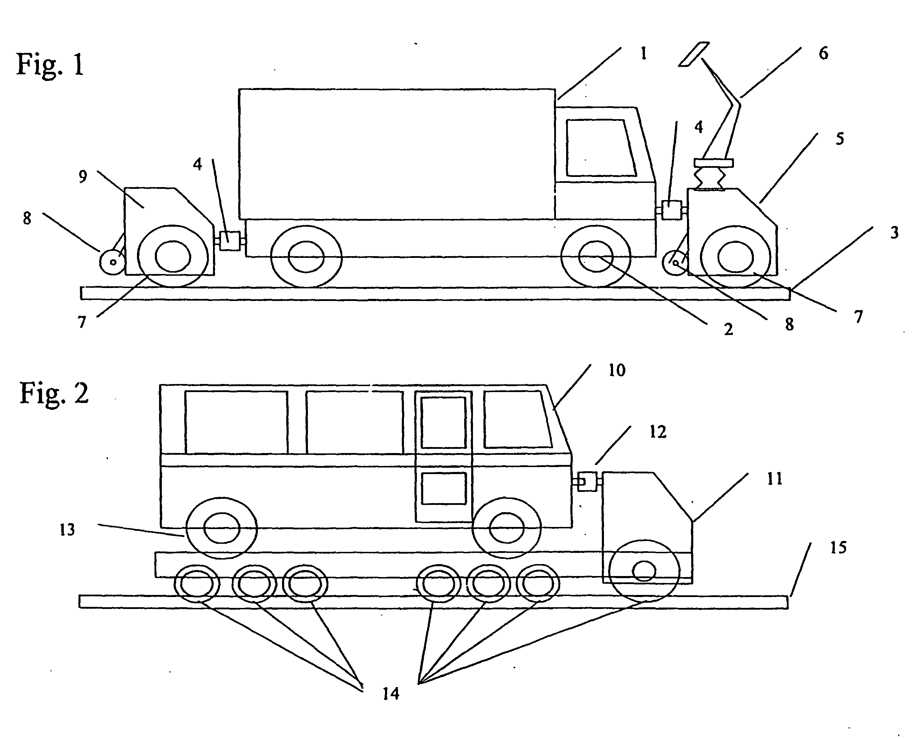

In Fig. 1 bezeichnet die Bezugsziffer 1 ein Fahrzeug mit einem Verbrennungsmotor, hier beispielsweise einen Lastkraftwagen. Besonders vorteilhaft ist die gegenständliche Erfindung aber auch bei Bussen zur Personenbeförderung, insbesonders im öffentlichen Verkehrssystem, anwendbar. Das Fahrzeug 1 ist mit einem Fahrwerk 2 für einen Verkehrsweg 3, vorzugsweise eine Straße, versehen. Es ist aber vorteilhafterweise mit einem zweiten Fahrwerk für einen anderen Fahrweg, beispielsweise Schienen, ausgerüstet oder zum Wechseln seiner Fahrwerke ausgelegt, um auf unterschiedlichen Verkehrswegen betrieben werden zu können.

Über zumindest eine Verbindungseinrichtung 4 kann das Fahrzeug 1 an eine externe Antriebseinheit 5 angekoppelt werden, die vorzugsweise auf einem anderen Antriebssystem basiert als das Fahrzeug 1 und die mit einem Elektromotor, vorzugsweise mit einem Elektroantrieb ausgerüstet ist. Dieser Elektroantrieb kann über zumindest eine Batterie, einen Akkumulator oder aber vorzugsweise über zumindest einen Stromabnehmer 6 aus dem Stromnetz - allenfalls einem bereits für den Betrieb von Eisenbahnen, Straßen- oder U-Bahnen eingerichteten Versorgungsnetz - gespeist werden. Die externe Antriebseinheit 5 kann dabei mit dem gleichen Fahrwerk 7 wie das Fahrzeug 1, ebenfalls vorzugsweise umrüstbar oder mit einem Wechselfahrwerk, ausgestattet sein. Eine andere Alternative sieht vor, die externe Antriebseinheit 5 mit einem Fahrwerk für eine andere Art von Verkehrsweg auszustatten als das Fahrzeug 1 normalerweise aufweist und Fahrzeug 1 und Antriebseinheit 5 auch nur dann zu koppeln, wenn das Fahrzeug 1 auf dem anderen Verkehrsweg betrieben werden soll.

Beispielsweise kann ein Straßen-LKW in bestimmten Gebieten oder für bestimmte Strecken auf Schienenbetrieb umgerüstet werden, wobei dann sein Verbrennungsmotor außer Betrieb bleibt und der Antrieb über eine nur für Schienenbetrieb ausgelegte externe Antriebseinheit mit Elektromotor, vorzugsweise mit über ein Stromnetz versorgtem Elektromotor, erfolgt. Die Steuerung der besagten Antriebseinheit erfolgt aber weiterhin vom Fahrzeug selbst ausgehend über die dafür vorgesehen Schnittstellen. Um das Ankoppeln zu erleichtern und die Handhabung der externen Antriebseinheiten 5 zu verbessern, können diese mit zumindest einem Stützrad 8 versehen sein.

Die externe Antriebseinheit 5 kann entweder vorne oder hinten an das Fahrzeug 1 angekoppelt werden und es können allenfalls auch zwei - oder mehrere - Antriebseinheiten vorgesehen sein, wie dies in Fig. 1 durch die zweite, hintere Antriebseinheit 9 angedeutet ist. In letzterem Fall könnte vorteilhafterweise die am Fahrzeug 1 meist vorgesehene Anhängerkupplung zum Ankoppeln der Verbindungseinrichtung 4 genutzt werden.

Eine andere vorteilhafte Ausführungsform ist in Fig. 2 dargestellt, wo das Fahrzeug 10, hier beispielsweise ein Autobus zur Personenbeförderung, auf eine Ladefläche der externen Antriebseinheit 11 auffährt und dort fixiert wird. Die Antriebseinheit 11 ist dabei fast als eigenständiges Fahrzeug ausgelegt, nur die Steuerung und Bedienung erfolgt wieder vom Fahrzeug 10 aus, welche über zumindest eine Verbindungseinrichtung 12 und Schnittstelle mit der Antriebseinheit verbunden ist. Vorteilhafterweise sind Fahrzeug 10 und Antriebseinheit 11 wieder für unterschiedliche Fahrwege ausgelegt, vorzugsweise ist das Fahrzeug 10 mit Rädern 13 für den Straßenbetrieb ausgestattet, während die Antriebseinheit 11 mit Schienenrädern 14 für vorzugsweise herkömmliche Schienen 15 und entsprechenden Laufwerken ausgerüstet ist. Auch die Antriebssysteme sind vorteilhafterweise unterschiedlich aufgebaut, wobei meist das Straßenfahrzeug 10 einen Verbrennungsmotor und die externe Antriebseinheit 11 einen Elektroantrieb aufweist. Nur beispielhaft ist die externe Antriebseinheit 11 ohne Stromabnehmer dargestellt, um auch die Möglichkeit des Betriebs mit Speisung aus zumindest einer Batterie oder einem Akkumulator darzustellen. Die Höhe der Ladefläche der Antriebseinheit 11 ist sinnvollerweise derart bemessen, dass sie die Differenz der Einstiegshöhen der Fahrsteige entlang des Fahrweges der externen Antriebseinheit 11, beispielsweise von Bahnsteigen für U-Bahnen, und des geladenen Straßenfahrzeuges 10 ausgleicht und so den ungehindertes Fahrgastwechsel auf einem Niveau gestattet.

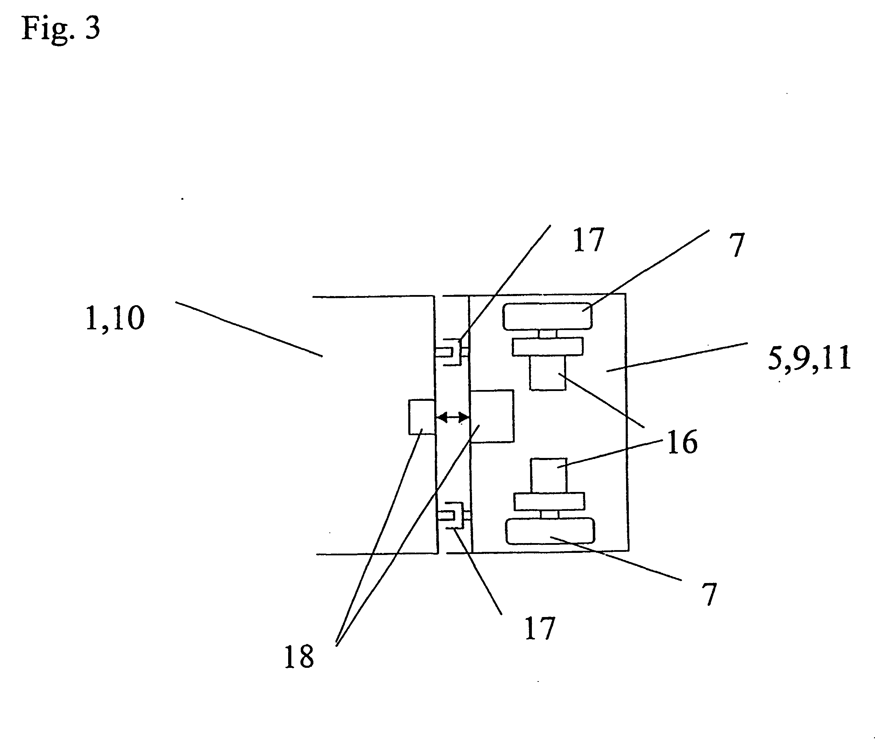

Ein Ausführungsbeispiel für eine Verbindung zwischen Fahrzeug 1, 10 und Antriebseinheit 5, 9 oder 11, welches selbstverständlich für alle Arten von Fahrzeugen und Antriebseinheiten anwendbar ist, ist in Fig. 3 gezeigt. Die Antriebseinheit 5, 9 oder 11 ist dabei mit einem elektrisch angetriebenen Losradfahrwerk mit zwei Rädern 7 und jeweils einem zugehörigen Elektromotor 16 ausgestattet, der seine Energie aus einer Batterie, einem Akkumulator oder über einen Stromabnehmer aus einem Stromnetz beziehen kann. Zur Übertragung der Antriebs- und Bremskräfte sind zwei seitlich und in Längsrichtung starre Kupplungen 17 vorgesehen, die aber eine Verschwenkung um eine im wesentlichen horizontale und quer zur Fahrrichtung liegende Achse gestatten. Die Antriebseinheit 5, 9 oder 11 wird vom Führerstand des Fahrzeuges 1, 10 aus mittels vorzugsweise gesonderter Bedienungselemente gesteuert, wobei die Signalübertragung über prinzipiell beliebige Wege hergestellt werden kann, beispielsweise über einen Signalbus, über optische oder akustische Koppler, beispielsweise über Infrarot-Fembedienung, über Funk, etc. Dazu sind am Fahrzeug 1, 10 und an der Antriebseinheit 5, 9 oder 11 die entsprechenden Schnittstellen 18 vorgesehen.

Schließlich ist in Fig. 4 noch eine weitere vorteilhafte Variante der Erfindung dargestellt, bei der mehrere Fahrzeuge 1 und mehrere Antriebseinheiten 5 zu einem Zug zusammengekoppelt sind, der je nach Fahrwerk der Fahrzeuge 1 und der Antriebseinheiten auf beispielsweise Schiene oder Straße betrieben werden kann. Dabei ist es wegen der gleichmäßigen Verteilung der Antriebs- und Bremskräfte und auch des Gewichts vorteilhaft, wenn abwechselnd ein Fahrzeug 1 und eine Antriebseinheit 5 aufeinanderfolgen.

Anschließend sei auch noch die Möglichkeit erwähnt, dass die Antriebseinheit und das angekoppelte Fahrzeug bei allen bisher beschriebenen Varianten auch auf unterschiedlichen Verkehrswegen betrieben werden können, wobei dann auch die starre Kopplung aufgegeben werden kann. Beispielsweise könnte ein Straßenfahrzeug ohne Fahrwerkswechsel für bestimmte Gebiete oder Strecken einen Elektroantrieb vorgespannt bekommen, der auf neben oder auf der Straße verlaufenden Schienen fährt. Insbesondere für Autobusse im öffentlichen Verkehr ist diese Möglichkeit von Vorteil, wenn sie auf Strecken, auf denen auch Straßenbahnen geführt werden oder wurden, den umweltschonenden Elektroantrieb auf diesen Schienen geführter an- und abkoppelbarer Elektro-Antriebseinheiten nutzen können.

Bei allen genannten Varianten könnte anstelle der Steuerung vom Führerstand des Fahrzeuges aus auch ein fahrerloser Betrieb mit Steuerung der externen Antriebseinheit von außen her, beispielsweise durch Induktionsschleifen im Bereich des Fahrweges, durch Signalgeber am Fahrbahnrand, etc., erfolgen. Diese externe Beeinflussung kann auch zusätzlich zur Steuerung durch den Fahrer vorhanden sein und je nach Bedarf aktiviert werden. Ebenso können die externen Antriebseinheiten aller Ausführungsformen bei Bedarf mit zumindest einer lenkbaren Achse bzw. lenkbaren Rädern ausgestattet sein.

## Patentansprüche

1. Fahrzeuganordnung, bestehend aus zumindest zwei Fahrzeugen, wobei ein erstes Fahrzeug (1, 10) mit einem Führerstand, einem Antrieb durch ausschließlich eine Verbrennungskraftmaschine, einem Fahrwerk für eine spezielle Art von Verkehrsweg und Verbindungs- sowie Bedien- und Steuereinrichtungen für zumindest ein weiteres Fahrzeug (5, 9, 11) mit integriertem Motor ausgestattet ist, wobei das erste Fahrzeug (1, 10) allenfalls mit zumindest einem wahlweise aktivierbaren, zusätzlichen Fahrwerk für eine zweite Art von Verkehrsweg ausgestattet ist oder allenfalls das Fahrwerk des ersten Fahrzeuges (1, 10) abnehmbar ist und Aufnahmen für zumindest ein anderes Fahrwerk für eine zweite Art von Verkehrsweg vorgesehen sind, wobei weiters zumindest ein weiteres Fahrzeug der Fahrzeuganordnung als führerstandslose externe Antriebseinheit (5, 9, 11) mit Elektromotor (16) und mit zumindest einer Antriebs- und Bremskräfte übertragenden Verbindungseinrichtung (4, 12, 17) und zumindest einer Schnittstelle (18) zu den Bedien- und Steuereinrichtungen am ersten Fahrzeug (1, 10) ausgeführt ist, **dadurch gekennzeichnet, dass** die führerstandslose externe Antriebseinheit (5, 9, 11) mit einem unabhängig von jeglicher Art von Verbrennungsmotor betreibbaren Elektromotor (16) ausgestattet ist.

2. Fahrzeuganordnung nach Anspruch 1, **dadurch gekennzeichnet, dass** die externe Antriebseinheit (5, 9, 11) mit zumindest einem Stromabnehmer (6) zur elektrisch leitenden Verbindung des Elektromotors (16) mit einer Stromschiene oder einer Stromleitung, vorzugsweise einer Oberleitung, vorgesehen ist.

3. Fahrzeuganordnung nach Anspruch 1, **dadurch gekennzeichnet, dass** in der externen Antriebseinheit (5, 9, 11) zumindest eine Batterie bzw. ein Akkumulator vorhanden und mit dem Elektromotor (16) verbindbar sind.

4. Fahrzeuganordnung nach zumindest einem der vorhergehenden Ansprüche, **dadurch gekennzeichnet, dass** das Fahrwerk (7, 14) der externen Antriebseinheit (5, 9, 11) für eine andere Art von Fahrweg ausgelegt ist als das Fahrwerk (2, 13) des ersten Fahrzeuges (1, 10).

5. Fahrzeuganordnung nach Anspruch 4, **dadurch gekennzeichnet, dass** die externe Antriebseinheit (5, 9, 11) mit zumindest einem zusätzlichen Fahrwerk für eine zweite, unterschiedliche Art von Verkehrsweg ausgestattet ist, welches zusätzliche Fahrwerk wahlweise aktiviert werden kann.

6. Fahrzeuganordnung nach Anspruch 4, **dadurch gekennzeichnet, dass** das Fahrwerk der externen Antriebseinheit (5, 9, 11) abnehmbar ist und Aufnahmen für zumindest ein anderes Fahrwerk für eine zweite, unterschiedliche Art von Verkehrsweg vorgesehen sind.

7. Fahrzeuganordnung, bestehend aus zumindest zwei Fahrzeugen (10; 11), wobei ein erstes Fahrzeug (10) mit einem Führerstand, einem Antrieb durch ausschließlich eine Verbrennungskraftmaschine, einem Fahrwerk für eine spezielle Art von Verkehrsweg und Verbindungs- sowie Bedien- und Steuereinrichtungen für zumindest ein weiteres Fahrzeug mit integriertem Elektromotor ausgestattet ist, wobei ein weiteres Fahrzeug (11) der Anordnung eine Aufnahme- bzw. Ladefläche zum Tragen zumindest des ersten Fahrzeuges (10) der Fahrzeuganordnung, zumindest eine Verbindungseinrichtung (12) zu diesem getragenen Fahrzeug (10) und zumindest eine Schnittstelle zu den Bedien- und Steuereinrichtungen an diesem Fahrzeug (10) aufweist, **dadurch gekennzeichnet, dass** die externe Antriebseinheit (11) zumindest einen integrierten Elektromotor aufweist, der unabhängig vom Verbrennungsmotor des ersten Fahrzeuges (10) betreibbar und mit zumindest einem Antriebs- und Bremskräfte auf einen Verkehrsweg übertragenden Fahrwerk (14) verbunden ist.

8. Fahrzeuganordnung nach zumindest einem der vorhergehenden Ansprüche, **dadurch gekennzeichnet, dass** zusätzlich zur ersten Verbindungseinrichtung (4, 12, 17) zumindest eine weitere Verbindungseinrichtung zu einem weiteren Fahrzeug und/oder einer weiteren externen Antriebseinheit vorhanden ist, wobei vorzugsweise auch Schnittstellen (18) für Bedien- und Steuereinrichtungen zu einem weiteren Fahrzeug und/oder einer weiteren externen Antriebseinheit vorhanden sind.

## Claims

1. A vehicle arrangement comprised of at least two vehicles, wherein a first vehicle (1, 10) is equipped with a driver's cab, exclusive combustion engine drive, a running gear for a special kind of traffic route, and connecting as well as operating and control devices for at least one additional vehicle (5, 9, 11) with integrated motor, wherein the first vehicle (1, 10) is possibly equipped with at least one, optionally activatable, additional running gear for a second type of traffic route, or possibly the running gear of the first vehicle (1, 10) is removable, and receptacles for at least one other running gear for a second type of traffic route, wherein at least one additional vehicle of the vehicle arrangement is additionally designed as an external drive unit (5, 9, 11) without a cab, but with an electric motor (16), and with at least one connecting device (4, 12, 17) that imparts driving and braking forces, and at least one interface (18) to the operating and control devices on the first vehicle (1, 10), **characterized in that** the external drive unit (5, 9, 11) without a driver's cab is equipped with an electric motor (16) that can be operated independently of any kind of combustion engine.

2. The vehicle arrangement according to claim 1, **characterized in that** the external drive unit (5, 9, 11) is provided with at least one current collector (6) to conductively connect the electric motor (16) with a current bar or lead, preferably an overhead line.

3. The vehicle arrangement according to claim 1, **characterized in that** at least one battery or accumulator is present in the external drive unit (5, 9, 11), and can be connected with the electric motor (16).

4. The vehicle arrangement according to at least one of the preceding claims, **characterized in that** the running gear (7, 14) of the external drive unit (5, 9, 11) is designed for another type of traffic route than the running gear (2, 13) of the first vehicle (1, 10).

5. The vehicle arrangement according to claim 4, **characterized in that** the external drive unit (5, 9, 11) is equipped with at least one additional running gear for a second, different type of traffic route, the additional running gear of which can optionally be activated.

6. The vehicle arrangement according to claim 4, **characterized in that** the running gear of the external drive unit (5, 9, 11) can be removed, and receptacles for at least one other running gear for a second, differing type of traffic route are provided.

7. The vehicle arrangement, consisting of at least two vehicles (10; 11), wherein a first vehicle (10) with a driver's cap, a combustion engine drive a running gear for a special kind of traffic route, and connecting as well as operating and control devices for at least one additional vehicle with integrated electric motor, wherein another vehicle (11) of the arrangement has a receptacle or loading surface for carrying at least the first vehicle (10) of the vehicle arrangement, at least one connecting device (12) to this carried vehicle (10), and at least one interface to the operating and control devices on this vehicle (10), **characterized in that** the external drive unit (11) has at least one integrated electric motor, which can be operated independently of the combustion engine of the first vehicle (10), and is connected with at least one running gear (14) that imparts driving and braking forces on a traffic route.

8. The vehicle arrangement according to at least one of the preceding claims, **characterized in that** at least one other connecting device for another vehicle and/or another external drive unit is present in addition to the first connecting device (4, 12, 17), wherein interfaces (18) are advantageously also present for operating and control devices for another vehicle and/or another external drive unit.

## Revendications

1. Agencement de véhicules, consistant en au moins deux véhicules, un premier véhicule (1, 10) étant équipé d'un poste de conduite, une commande par exclusivement un moteur thermique, un châssis pour un type spécial de voie circulation ainsi que des dispositifs de liaison, pilotage et commande pour au moins un autre véhicule (5, 9, 11) avec un moteur intégré, le premier véhicule (1, 10) étant dans tous les cas équipé d'au moins un châssis supplémentaire actionnable au choix pour un deuxième type de voie de circulation ou le châssis du premier véhicule (1, 10) étant dans tous les cas amovible et des supports pour au moins un autre type de voie de circulation étant prévus, au moins un autre véhicule de l'agencement de véhicules étant réalisé en tant qu'unité externe d'entraînement (5, 9, 11) sans poste de conduite avec un moteur électrique (16) et au moins une installation de liaison (4, 12, 17) transférant les forces d'entraînement et de freinage et au moins une interface (18) pour les installations de pilotage et commande sur le premier véhicule (1, 10), **caractérisé en ce que** l'unité d'entraînement (5, 9, 11) externe sans poste de conduite est équipée d'un moteur électrique (16) actionnable indépendamment de toute sorte de moteur à combustion interne.

2. Agencement de véhicules selon la revendication 1, **caractérisé en ce que** l'unité d'entraînement externe (5, 9, 11) prévoit au moins une prise de courant (6) pour la liaison de conduction électrique du moteur électrique (16) avec un rail de contact ou une ligne de courant, de préférence une ligne aérienne.

3. Agencement de véhicules selon la revendication 1, **caractérisé en ce que**, dans l'unité d'entraînement externe (5, 9, 11), au moins une pile ou un accumulateur sont compris et peuvent être reliés au moteur électrique (16).

4. Agencement de véhicules selon au moins une des revendications précédentes, **caractérisé en ce que** le châssis (7, 14) de l'unité d'entraînement externe (5, 9, 11) est équipé pour un autre type de véhicule que le châssis (2, 13) du premier véhicule (1, 10).

5. Agencement de véhicules selon la revendication 4, **caractérisé en ce que** l'unité d'entraînement externe (5, 9, 11) est équipée d'au moins un châssis supplémentaire pour un deuxième type différent de voie de circulation, lequel châssis peut être actionné au choix.

6. Agencement de véhicules selon la revendication 4, **caractérisé en ce que** le châssis de l'unité d'entraînement externe (5, 9, 11) est amovible et que des supports pour au moins un autre châssis pour un deuxième type différent de voie circulation sont prévus.

7. Agencement de véhicules, consistant en au moins deux véhicules (10, 11), un premier véhicule (10) étant équipé d'un poste de conduite, d'un entraînement par exclusivement un moteur thermique, d'un châssis pour un type spécial de voie de circulation et de dispositifs de liaison ainsi que de pilotage et de commande pour au moins un autre véhicule avec un moteur électrique intégré, un autre véhicule (11) de l'agencement présentant un support ou une surface de chargement pour porter au moins le premier véhicule (10) de l'agencement de véhicules, au moins un dispositif de liaison (12) avec ce véhicule porté (10) et au moins une interface avec les installations de pilotage et commande sur ce véhicule (10), **caractérisé en ce que** l'unité d'entraînement externe (11) présente au moins un moteur électrique intégré qui est actionnable indépendamment du moteur à combustion du premier véhicule (10) et est relié à au moins un châssis (14) transférant les forces d'entraînement et de freinage sur une voie de circulation.

8. Agencement de véhicules selon au moins une des revendications précédentes, **caractérisé en ce qu'**en plus du premier dispositif de liaison (4, 12, 17), au moins un autre dispositif de liaison avec un autre véhicule et/ou une autre unité externe d'entraînement est prévu, des interfaces (18) avec un autre véhicule et/ou une autre unité d'entraînement externe étant également de préférence prévues pour les dispositifs de pilotage et de commande
